# EUROPÄISCHE PATENTSCHRIFT

(11) **EP 4 402 735 B1**
(45) Veröffentlichungstag und Bekanntmachung des Hinweises auf die Patenterteilung: **04.06.2025**
(21) Anmeldenummer: 22721659.5
(22) Anmeldetag: 06.04.2022
(51) Int. Cl.: H01M 4/73, H01M 10/06

(54) **GITTER FÜR ELEKTRODEN VON BLEI-SÄURE-BATTERIEN**
GRID FOR LEAD-ACID-BATTERY ELECTRODES
GRILLE POUR ÉLECTRODES DE BATTERIE AU PLOMB-ACIDE

(43) Veröffentlichungstag der Anmeldung: 24.07.2024
(73) Patentinhaber: HOPPECKE Batterien GmbH & Co. KG., 59929 Brilon (DE)
(72) Erfinder: CATTANEO, Eduardo, 59929 Brilon (DE); LANGER, Götz, 59929 Brilon (DE); STEIGER, Cora, 59929 Brilon (DE)
(74) Vertreter: Brinkmann & Partner
(86) Internationale Anmeldenummer: PCT/EP2022/059156
(87) Internationale Veröffentlichungsnummer: WO 2023/193902

(56) Entgegenhaltungen:
- CN-A- 106 654 284
- DE-T2- 69 622 312

## Beschreibung

Die Erfindung betrifft ein Gitter für eine Elektrode einer Blei-Säure-Batterie, mit einer Mehrzahl von in Querrichtung beabstandet zueinander angeordneten Längsrippen und einer Mehrzahl von jeweils zwischen zwei benachbarten Längsrippen angeordneten und mit diesen verbundenen Querrippen, welche Längs- und Querrippen ein Gittermuster mit offenen Bereichen zur Aufnahme einer aktiven Masse ausbilden, wobei die Längsrippen zumindest in einem in Längsrichtung verlaufenden Abschnitt in Querrichtung eine erste, maximale Breite aufweisen, die hinsichtlich des von den offenen Bereichen insgesamt bereitgestellten Aufnahmevolumens zur Aufnahme der aktiven Masse optimiert ausgebildet ist.

Gitter für eine Elektrode im Allgemeinen sowie Gitter für eine Elektrode einer Pluspol-Platte einer Blei-Säure-Batterie im Speziellen sind aus dem Stand der Technik an sich gut bekannt, weshalb es eines gesonderten druckschriftlichen Nachweises an dieser Stelle nicht bedarf. Es sei deshalb auch nur beispielhaft auf die DE 696 22 312 T2 und die DE 698 11 939 T2 verwiesen, die derartige Gitter offenbaren. Dabei betrifft die DE 698 11 939 T2 ein gestanztes Batterieplattengitter, wohingegen die DE 696 22 312 T2 ein in einem kontinuierlichen Gießverfahren hergestelltes Batteriegitter betrifft. weiterhin ist auch aus der CN 106 654 284 A entsprechende Technologie bereits bekannt.

Ein gattungsgemäßes Gitter verfügt über eine Mehrzahl von Längsrippen. Diese erstrecken sich in Längsrichtung des Gitters und sind unter Belassung eines Spaltraums in Querrichtung des Gitters beabstandet zueinander angeordnet.

Es sind ferner Querrippen vorgesehen, die sich in Querrichtung erstrecken und die zwischen zwei benachbarten Längsrippen angeordnet und mit diesen verbunden sind.

In ihrer Kombination bilden die Längs- und Querrippen ein Gittermuster aus, das über fensterartig, vorzugsweise rechteckförmig ausgebildete offene Bereiche verfügt, die der Aufnahme einer aktiven Masse dienen.

Im endfertig montierten Zustand einer Elektrode ist in die vom Gitter bereitgestellten offenen Bereiche eine aktive Masse eingebracht, wobei das Gitter einschließlich der davon aufgenommenen aktiven Masse von einem elektrolytpermeablen Separator abgedeckt ist.

Das Gitter ist aus einem elektrisch leitenden Material gebildet, bei welchem es sich im Falle einer Blei-Säure-Batterie um Blei handelt. Als aktive Masse kann für eine Pluspolelektrode ein Metalloxid, wie zum Beispiel MnO₂, PbO₂, NiOOH, HgO und Ag₂O zum Einsatz kommen, wohingegen die aktive Masse einer Minuselektrode aus einem Metall gebildet ist, bei dem es sich beispielsweise um Zn, Cd, Pb und Sn handeln kann. Der Erfindung ist allerdings nicht auf die vorgenannten Materialien beschränkt, sondern umfasst alle Materialien, die elektrochemisch wirken können.

Es ist prinzipiell angestrebt, das von den offenen Bereichen des Gitters insgesamt bereitgestellte Aufnahmevolumen zur Aufnahme der aktiven Masse zu maximieren, sodass im Verhältnis zu der passiven Masse des Gittermaterials möglichst viel aktive Masse vom Gitter aufgenommen werden kann. Aus diesem Grunde sind die Längsrippen hinsichtlich ihrer Erstreckung in Querrichtung möglichst dünn auszubilden. Gleichwohl aber muss eine hinreichende Lebensdauer sichergestellt und eine gewünschte Stromabnahme im bestimmungsgemäßen Verwendungsfall ermöglicht sein. Gattungsgemäße Gitter verfügen deshalb über Längsrippen, die hinsichtlich ihrer geometrischen Ausgestaltung in Querrichtung optimiert ausgebildet sind, d. h. über Längsrippen, die zumindest in einem in Längsrichtung verlaufenden Abschnitt in Querrichtung eine erste, maximale Breite aufweisen, die hinsichtlich des von den offenen Bereichen insgesamt bereitgestellten Aufnahmevolumens zur Aufnahme der aktiven Masse optimiert ausgebildet ist. Diese Breite beträgt beispielsweise ca. 1,6 mm.

Obgleich sich aus dem Stand der Technik vorbekannte Gitter im alltäglichen Praxiseinsatz bewährt haben, besteht Verbesserungsbedarf. So kommt es durch im bestimmungsgemäßen Verwendungsfall auftretende Korrosion zu einem Wachsen der Gitter einer Pluspolelektrode. Infolge eines solchen Wachstums dehnt sich die Pluspolelektrode aus, und zwar insbesondere in Längsrichtung sowie in Querrichtung. Dabei kann sich die Elektrode in einer Größenordnung von 15 % und mehr ihrer ursprünglichen Erstreckung in Längsrichtung und Querrichtung ausdehnen. Dies kann wiederum zu einem Abriss der aktiven Masse von den Längs- und Querrippen des Gitters führen, was im bestimmungsgemäßen Verwendungsfall zu einer Kapazitätseinbuße der Batterie führt.

Um diesem Problem zu begegnen, können insbesondere die Längsrippen des Gitters verstärkt ausgebildet sein, d. h. in Querrichtung eine Breite aufweisen, die die für ein maximiertes Aufnahmevolumen zur Aufnahme der aktiven Masse optimierte Breite übersteigt. Eine solche Verstärkung der Längsrippen bringt allerdings den Nachteil mit sich, dass sich das vom Gitter bereitgestellte Aufnahmevolumen zur Aufnahme der aktiven Masse, auch Leervolumen genannt, mit der Folge verkleinert, dass im bestimmungsgemäßen Verwendungsfall eine verminderte Kapazität gegeben ist. Es stehen sich insofern zwei widerstreitende Interessen aneinander gegenüber.

Es ist ausgehend vom vorbeschriebenen Stand der Technik die **Aufgabe** der Erfindung, ein gattungsgemäßes Gitter dahingehend weiterzuentwickeln, dass bei gleichzeitiger Maximierung des Aufnahmevolumens zur Aufnahme der aktiven Masse ein vermindertes Gitterwachstum im bestimmungsgemäßen Verwendungsfall konstruktiv sichergestellt ist.

Zur Lösung dieser **Aufgabe** wird mit der Erfindung ein Gitter der eingangs genannten Art vorgeschlagen, das sich auszeichnet durch zumindest eine weitere Längsrippe, die über ihre gesamte Längserstreckung in Querrichtung eine zweite, maximale Breite aufweist, die die erste, maximale Breite der anderen Längsrippen übersteigt.

Das erfindungsgemäße Gitter verfügt mithin über zwei Typen von Längsrippen. In Entsprechung des Standes der Technik sind zum einen Längsrippen vorgesehen, die zumindest in einem in Längsrichtung verlaufenden Abschnitt in Querrichtung eine erste, maximale Breite aufweisen, die hinsichtlich des von den offenen Bereichen insgesamt bereitgestellten Aufnahmevolumens zur Aufnahme der aktiven Masse optimiert ausgebildet ist. Erfindungsgemäß ist wenigstens eine weitere Längsrippe vorgesehen, wobei diese Längsrippe über ihre gesamte Längserstreckung in Querrichtung eine zweite, maximale Breite aufweist, die die erste, maximale Breite der anderen Längsrippen übersteigt.

Im bestimmungsgemäßen Verwendungsfall lässt sich das Entstehen von Korrosion nicht vermeiden. Infolge dieser Korrosion bildet sich Bleioxid auf den Gitterrippen, so auch auf den Längsrippen des Gitters. Bleioxid hat ein sehr viel größeres molares Volumen als Blei, aus dem die Gitterrippen gebildet sind. Dieses Mehrvolumen hinsichtlich des Bleioxids führt dazu, dass es zu Scher- und Zugbeanspruchungen insbesondere in den Längsrippen kommt. Infolge dieser Kraftbeaufschlagung wächst das Gitter, d. h. es dehnt sich mit der Zeit aus. Eine solche Ausdehnung ist aus mehreren Gründen von Nachteil. Zum einen vergrößern sich die vom Gitter bereitgestellten offenen Bereiche, die die vom Gitter bereitgestellte aktive Masse beherbergen. Dies kann zu einem Kontaktabriss der aktiven Masse und einzelnen Gitterrippen führen, wodurch in nachteiliger Weise die Kapazität einer mit einem solchen Gitter ausgerüsteten Batterie sinkt.

Das korrosionsbedingte Gitterwachstum kann in nachteiliger Weise des Weiteren dazu führen, dass einzelne Längs- oder Querrippen den das Gitter bedeckenden Separator durchbrechen, was dann in unerwünschter Weise zu Kurzschlüssen führen kann.

Die erfindungsgemäße Ausgestaltung vermag ein solch unerwünschtes Gitterwachstum zu unterbinden, zumindest aber in einem Bereich unterhalb von 5 % bezogen auf die ursprüngliche geometrische Ausgestaltung des Gitters zu begrenzen. Dabei sind nicht sämtliche Längsrippen verstärkt, d. h. abweichend von der für eine Maximierung des Aufnahmevolumens für die aktive Masse optimierten Breite ausgebildet, sondern nur wenigstens eine Längsrippe.

Wie sich gezeigt hat, kann ein unerwünschtes Gitterwachstum effektiv bereits dadurch unterbunden werden, dass nicht jede Längsrippe des Gitters verstärkt wird, sondern nur einige, wenigstens aber eine. Damit ist den widerstreitenden Interessen Rechnung getragen, einerseits ein Gitterwachstum durch eine verstärkte Längsrippe zu minimieren, andererseits das Aufnahmevolumen für die aktive Masse mittels einer daran angepassten Breitenausgestaltung der übrigen Längsrippen zu maximieren. Im Ergebnis der erfindungsgemäßen Ausgestaltung steht ein Gitter, das aufgrund der zumindest einen weiteren Längsrippe ein im Vergleich zum Stand der Technik vermindertes Gitterwachstum im bestimmungsgemäßen Verwendungsfall aufweist, das aber gleichzeitig auch ein maximiertes Leervolumen zur Aufnahme der aktiven Masse bereitstellt.

Gemäß einem weiteren Merkmal der Erfindung ist vorgesehen, dass die zweite, maximale Breite die erste, maximale Breite um 20 % bis 35 %, vorzugsweise um 25 % bis 30 %, noch mehr bevorzugt um 27,5 % übersteigt. Mit derartigen Breitenverhältnissen ist eine weiter optimierte Ausgestaltung hinsichtlich vermindertem Gitterwachstum einerseits und Maximierung des Aufnahmevolumens zur Aufnahme der aktiven Masse gegeben.

Gemäß einem weiteren Merkmal der Erfindung ist vorgesehen, dass die erste, maximale Breite 1,4 mm bis 1,8 mm, vorzugsweise 1,5 mm bis 1,7 mm, noch mehr bevorzugt 1,6 mm beträgt. Die erste, maximale Breite ist hinsichtlich eines maximierten Aufnahmevolumens für die aktive Masse, einer maximierten Lebensdauer sowie einer optimierten Stromabnahme auszulegen. Aus diesem Grunde werden mit der Erfindung die vorstehend aufgeführten Breitenabmessungen vorgeschlagen. Gemäß einer besonderen Ausführungsform der Erfindung beträgt die erste, maximale Breite 1,62 mm.

Gemäß einem weiteren Merkmal der Erfindung ist vorgesehen, dass die zweite, maximale Breite 1,8 mm bis 2,2 mm, vorzugsweise 1,9 mm bis 2,1 mm, noch mehr bevorzugt 2,0 mm beträgt. Die zweite, maximale Breite ist anders als die erste, maximale Breite dahingehend auszulegen, dass eine solche Verstärkung des Gitters erreicht ist, dass es im bestimmungsgemäßen Verwendungsfall nicht zu einem ungewollten Gitterwachstum kommt, das Gitterwachstum zumindest auf 5 % bezogen auf die ursprünglichen geometrischen Abmessungen begrenzt ist. Dies kann mit den vorstehend aufgeführten Breitenabmessungen erreicht werden, wobei gemäß einem besonders bevorzugten Ausführungsbeispiel eine zweite, maximale Breite von 2,06 mm gegeben ist.

Gemäß einem weiteren Merkmal der Erfindung ist vorgesehen, dass nicht nur eine weitere Längsrippe, sondern eine Mehrzahl von weiteren Längsrippen mit einer in Querrichtung zweiten, maximalen Breite vorgesehen ist. Die genaue Anzahl der weiteren Längsrippen ergibt sich insbesondere in Abhängigkeit der Erstreckung des Gitters in Querrichtung sowie der im bestimmungsgemäßen Verwendungsfall zu erwartenden Kraftbeaufschlagungen des Gitters, die zu einer Ausdehnung desselben führen. Bei gegebenen Abmessungen für die zweite, maximale Breite ist die Anzahl der insgesamt vorzusehenden weiteren Längsrippen so zu wählen, dass die im bestimmungsgemäßen Verwendungsfall auftretende Kraftbeaufschlagung des Gitters insoweit kompensiert werden kann, als dass ein Gitterwachstum auf unter 5 % begrenzt ist.

Gemäß einem weiteren Merkmal der Erfindung ist in diesem Zusammenhang vorgesehen, dass in Querrichtung des Gitters jede dritte bis fünfte, vorzugsweise jede vierte Längsrippe eine weitere Längsrippe mit einer in Querrichtung zweiten, maximalen Breite ist. Demnach verfügt ein erfindungsgemäßes Gitter bevorzugter Weise über drei in Querrichtung hintereinander angeordnete Längsrippen gefolgt von einer weiteren Längsrippe, d. h. einer Längsrippe mit einer in Querrichtung zweiten, maximalen Breite. Es hat sich gezeigt, dass bei einer solchen Abfolge von Längsrippen ein optimiertes Ergebnis hinsichtlich vermindertem Wachstum im bestimmungsgemäßen Verwendungsfall und Aufnahmekapazität für aktive Masse erzielt ist.

Gemäß einem weiteren Merkmal der Erfindung ist vorgesehen, dass die Längsrippen in einem in Längsrichtung verlaufenden zweiten Abschnitt in Querrichtung eine Breite aufweisen, die der zweiten, maximalen Breite der weiteren Längsrippe entspricht.

Gemäß dieser besonderen Ausführungsform, die für sich selbst schutzfähig ist, verfügen die Längsrippen nicht nur über einen ersten Abschnitt, in welchem sie eine erste, maximale Breite in Querrichtung besitzen, sondern zuzüglich über einen zweiten Abschnitt, in welchem sie eine Breite in Querrichtung besitzen, die der zweiten, maximalen Breite der weiteren Längsrippen entspricht. Die weiteren Längsrippen sind mithin über ihre gesamte Längserstreckung gleich breit ausgebildet, wobei die übrigen Längsrippen jeweils Abschnitte mit unterschiedlichen Breitenausgestaltungen aufweisen.

Dabei sind die zweiten Abschnitte der Längsrippen vorzugsweise stromabnahmeseitig ausgebildet, weil hier im bestimmungsgemäßen Verwendungsfall die stärksten Korrosionserscheinungen auftreten. Durch diese konstruktive Maßnahme ist das im bestimmungsgemäßen Verwendungsfall auftretende Gitterwachstum zusätzlich minimiert.

Gemäß einem weiteren Merkmal der Erfindung ist vorgesehen, dass die Längsrippen in einem in Längsrichtung zwischen dem zweiten und dem ersten Abschnitt verlaufenden dritten Abschnitt in Querrichtung eine Breite aufweisen, die sich ausgehend von der zweiten, maximalen Breite kontinuierlich bis zu einer dritten, maximalen Breite verjüngt. Demnach ist vorgesehen, dass die Längsrippen einendseitig, vorzugsweise stromabnahmeseitig einen Abschnitt aufweisen, in welchen die Längsrippen über eine zweite, maximale Breite in Querrichtung verfügen. Ausgehend von dieser Breitenabmessung nimmt die Breitenausgestaltung der Längsrippen vorzugsweise kontinuierlich ab, und zwar bis zum Erreichen einer dritten, maximalen Breite, die größer ist als die erste, maximale Breite. Von hieraus nimmt die Breitenabmessung in Längsrichtung der Längsrippe weiter ab, und zwar vorzugsweise sprunghaft, und dies bis auf die erste, maximale Breite. Alternativ ist auch hier eine kontinuierliche Verjüngung.

Gemäß der bevorzugten Ausführungsform der Erfindung nimmt mithin die Breitenabmessung einer Längsrippe ausgehend von der zweiten, maximalen Breite kontinuierlich bis zum Erreichen einer dritten, maximalen Breite ab, wobei die dritte, maximale Breite die erste, maximale Breite übersteigt. Der Übergang zur ersten, maximalen Breite ist dann ausgehend von der dritten, maximalen Breite sprunghaft ausgebildet, d. h. nicht kontinuierlich wie der Übergang von der zweiten, maximalen Breite zur dritten, maximalen Breite.

Dieser im Besonderen vorgeschlagene Breitenverlauf der Längsrippen trägt ebenfalls zu einer Optimierung hinsichtlich vermindertem Gitterwachstum im bestimmungsgemäßen Verwendungsfall und maximierter Aufnahmekapazität für die aktive Masse bei.

Gemäß einem weiteren Merkmal der Erfindung ist vorgesehen, dass sich die Längsrippen und die weitere Längsrippe zwischen einem ersten Rahmensteg und einem zweiten Rahmensteg erstrecken, mit denen sie jeweils einstückig verbunden sind, wobei der zweite Rahmensteg eine Stromabnehmerfahne trägt. Es ist so insgesamt ein vorzugsweise einstückiges Gitter ausgebildet, das sämtliche Längsrippen, Querrippen, Rahmenstege sowie die Stromabnehmerfahne umfasst. Dabei schließen sich gemäß einem weiteren Merkmal der Erfindung die zweiten Abschnitte der Längsrippen an den zweiten Rahmensteg und die ersten Abschnitte der Längsrippen an den ersten Rahmensteg an. Dabei verjüngen sich die einen Längsrippen in Längserstreckung des Gitters von oben nach unten, d. h. ausgehend vom zweiten Rahmensteg in Richtung auf den ersten Rahmensteg. Im Unterschied hierzu weisen die weiteren Längsrippen jeweils über ihre gesamte Längserstreckung in Querrichtung die zweite, maximale Breite auf, verjüngen sich mithin nicht.

Gemäß einem weiteren Merkmal der Erfindung ist vorgesehen, dass das Gitter in einem kontinuierlichen Gießverfahren hergestellt ist. Um in diesem Fall die Entformbarkeit zu gewährleisten, weisen sowohl die Längsrippen als auch die weiteren Längsrippen jeweils einen trapezförmig ausgebildeten Querschnitt auf.

Die Verwendung eines kontinuierlichen Gießverfahrens ist insbesondere deshalb bevorzugt, weil in ihren geometrischen Abmessungen unterschiedlich ausgebildete Längsrippen vorgesehen sind. Ein kontinuierliches Gießverfahren ist mit Bezug auf diese geometrische Ausgestaltung besonders einfach und kostensparend einzusetzen.

Alternativ ist aber auch die Herstellung des Gitters mittels Stanzen möglich, wobei in diesem Fall die Längsrippen sowie die weiteren Längsrippen vorzugsweise jeweils einen rechteckförmig ausgebildeten Querschnitt aufweisen. Mangels notwendiger Entformbarkeit kann beim Stanzen auf eine trapezförmige Querschnittsausgestaltung verzichtet werden, was auch den Verfahrensschritt des Stanzens vereinfacht.

Weitere Merkmale und Vorteile der Erfindung ergeben sich aus der nachfolgenden Beschreibung anhand der Figuren. Dabei zeigen
- Fig. 1: in schematischer Perspektivdarstellung ein erfindungsgemäßes Gitter;
- Fig. 2: in schematischer Draufsicht von vorn das erfindungsgemäße Gitter nach Figur 1;
- Fig. 3: in schematischer Draufsicht von vorn das erfindungsgemäße Gitter nach Figur 1 mit eingezeichneten Schnittebenen;
- Fig. 4;: das erfindungsgemäße Gitter ausschnittsweise in einer Schnittdarstellung entlang der Schnittlinie A-A nach Figur 3;
- Fig. 5: das erfindungsgemäße Gitter ausschnittsweise in einer Schnittdarstellung entlang der Schnittlinie B-B nach Figur 3;
- Fig. 6: das erfindungsgemäße Gitter ausschnittsweise in einer Schnittdarstellung entlang der Schnittlinie C-C nach Figur 3;
- Fig. 7: in einer schematischen Seitenansicht das erfindungsgemäße Gitter nach Figur 3 und
- Fig. 8: das erfindungsgemäße Gitter in einer Detailansicht gemäß Ausschnitt Z nach Figur 7.

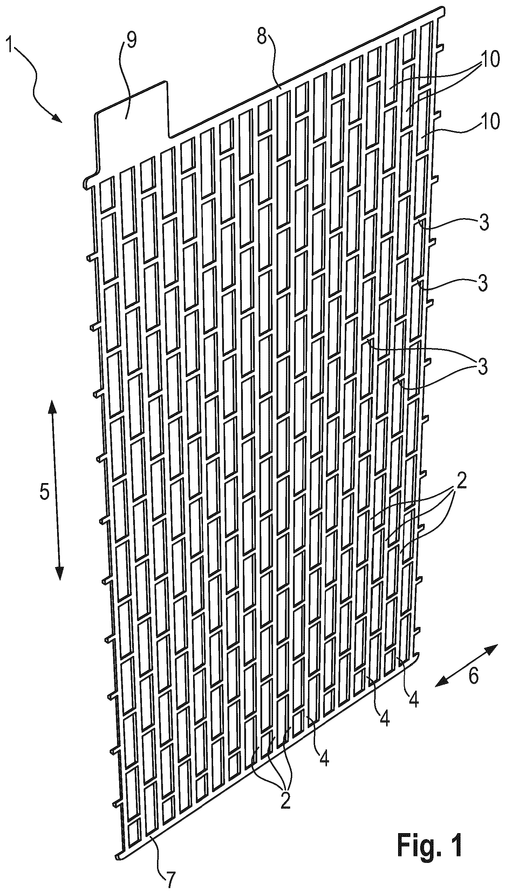

Figur 1 lässt in schematisch perspektivischer Darstellung ein erfindungsgemäßes Gitter 1 für eine Elektrode insbesondere einer Blei-Säure-Batterie erkennen.

Das Gitter 1 verfügt in an sich bekannter Weise über einen ersten Rahmensteg 7 und einen zweiten Rahmensteg 8, zwischen denen sich Längsrippen 2 bzw. 4 erstrecken. Diese Längsrippen 2 bzw. 4 sind in Querrichtung 6 beabstandet zueinander angeordnet.

Das Gitter 1 verfügt des Weiteren über eine Mehrzahl von jeweils zwischen zwei benachbarten Längsrippen 2 bzw. 4 angeordneten und mit diesen verbundenen Querrippen 3.

Die Längs- und Querrippen 2 bzw. 4 und 3 bilden ein Gittermuster mit offenen Bereichen 10 aus, welche Bereiche 10 der Aufnahme einer aktiven Masse dienen.

Es ist ferner noch eine Stromabnehmerfahne 9 vorgesehen, die an den in Längsrichtung 5 oberen, zweiten Rahmensteg 8 angeordnet ist.

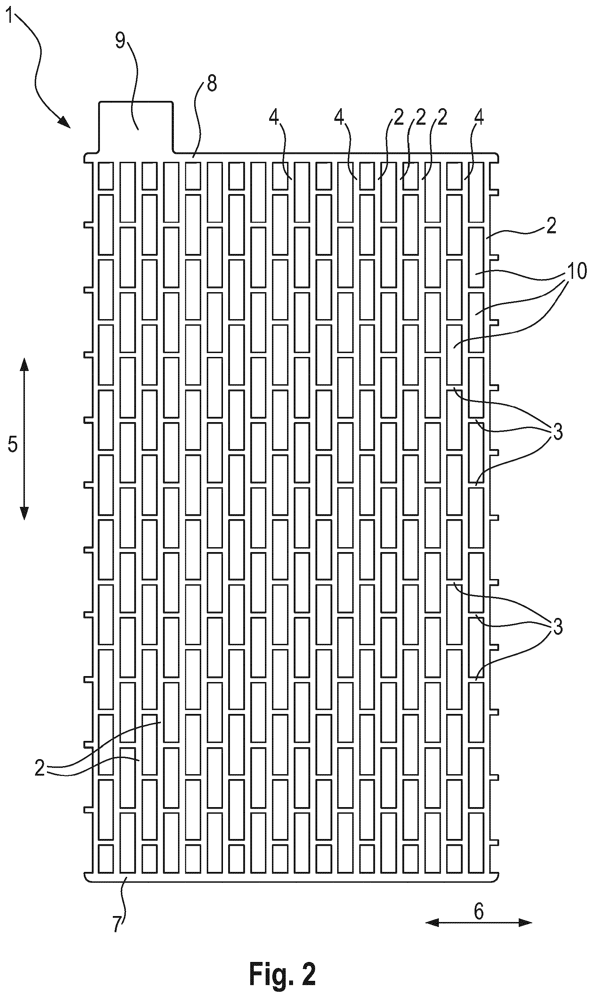

Figur 2 lässt das erfindungsgemäße Gitter 1 in einer Draufsicht von vorn erkennen, wobei sich aus dieser Ansicht insbesondere ergibt, dass die Querrippen 3 in Längsrichtung 5 von Längsrippe 2 bzw. 4 zu Längsrippe 2 bzw. 4 versetzt angeordnet sind. Es ergibt sich so ein ebenfalls versetztes Muster der offenen Bereiche 10.

Erfindungsgemäß sind die Längsrippen 2 einerseits und die weiteren Längsrippen 4 andererseits in ihrer Breitenausgestaltung in Querrichtung 6 unterschiedlich ausgebildet. Mit Bezug auf die Breitenerstreckung in Querrichtung 6 stellen mithin die Längsrippen 2 einen ersten Längsrippentyp und die zweiten Längsrippen 4 einen zweiten Längsrippentyp dar.

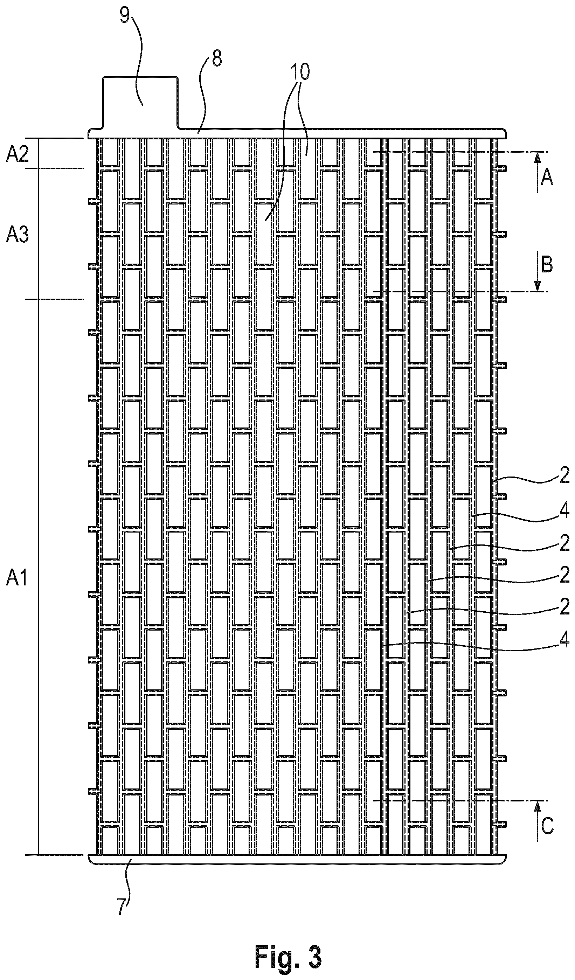

Die unterschiedliche Ausgestaltung der Längsrippen 2 bzw. 4 ergibt sich insbesondere aus einer Zusammenschau der Figuren 3 bis 8.

Wie zunächst Figur 3 zu entnehmen ist, ist in Querrichtung 6 jede vierte Längsrippe als weitere Längsrippe 4 ausgebildet. Bei allen anderen Längsrippen handelt es sich um Längsrippen des ersten Typs, d. h. um Längsrippen 2. Demnach folgen auf eine weitere Längsrippe 4 drei Längsrippen 2, gefolgt von einer weiteren Längsrippe 4, wiederum gefolgt von drei Längsrippen 2 usw.

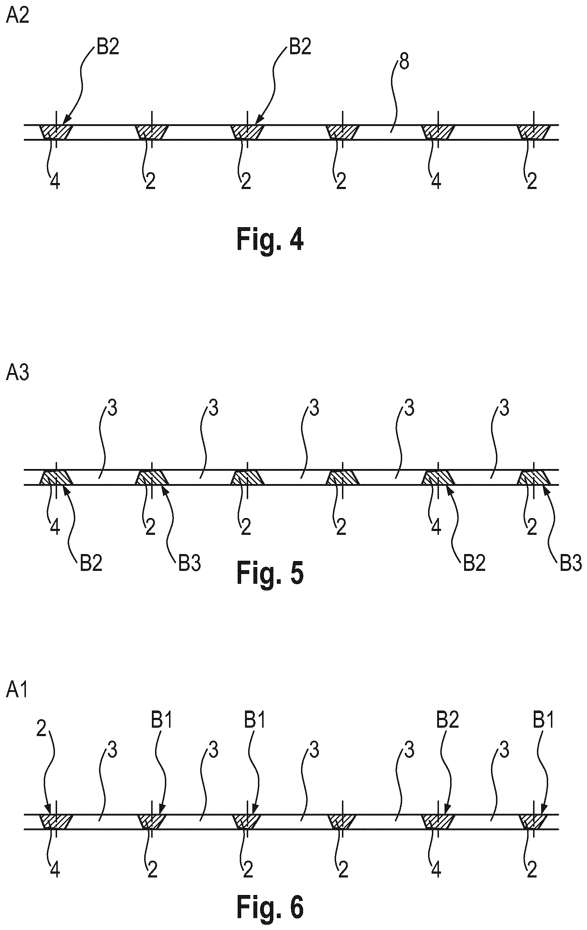

Die Längsrippen 2 weisen jeweils einen ersten Abschnitt A1 auf, an den sich der erste Rahmensteg 7 anschließt. Im Bereich dieses ersten Abschnitts A1 verfügen die Längsrippen 2 jeweils in Querrichtung 6 über eine erste, maximale Breite B1, wie sich insbesondere aus der Schnittdarstellung nach Figur 6 ergibt. Diese erste, maximale Breite B1 ist hinsichtlich des von den offenen Bereichen 10 des Gitters 1 insgesamt bereitgestellten Aufnahmevolumens zur Aufnahme der aktiven Masse optimiert ausgebildet. Im gezeigten Ausführungsbeispiel beträgt diese erste, maximale Breite B1 1,62 mm.

Die weiteren Längsrippen 4 weisen im Unterschied zu den Längsrippen 2 über ihre gesamte Längserstreckung in Querrichtung 6 eine zweite, maximale Breite B2 auf, die die erste, maximale Breite B1 der Längsrippen 2 übersteigt. Im gezeigten Ausführungsbeispiel beträgt diese zweite, maximale Breite B2 2,06 mm, wie sich aus einer Zusammenschau der Schnittdarstellungen nach den Figuren 4, 5 und 6 ergibt.

Die im Vergleich zur Ausgestaltung der Längsrippen 2 verstärkte Ausgestaltung der weiteren Längsrippen 4 erbringt den positiven Effekt, dass das im bestimmungsgemäßen Verwendungsfall eines Gitters für eine Elektrode einer Batterie durch nicht zu vermeidende Korrosion auftretende Gitterwachstum minimiert ist. Die verstärkt ausgebildeten Längsrippen 4 vermögen die im Korrosionsfall auftretende Kraftbeaufschlagung zu kompensieren, was insbesondere einer Längenausdehnung des Gitters 1 in Längsrichtung 5 entgegensteht.

Die Längsrippen 2 sind hinsichtlich ihrer Breite in Querrichtung 6 zur Bereitstellung eines maximierten Aufnahmevolumens zur Aufnahme der aktiven Masse optimiert. In der Kombination ist mittels der Längsrippen 2 einerseits und der weiteren Längsrippen 4 andererseits ein Gitter 1 bereitgestellt, das bei gleichzeitiger Bereitstellung eines maximierten Aufnahmevolumens zur Aufnahme der aktiven Masse ein minimiertes Gitterwachstum im bestimmungsgemäßen Verwendungsfall sicherstellt.

Gemäß der in den Figuren 3 bis 8 gezeigten und bevorzugten Ausführungsform verfügen die Längsrippen 2 jeweils über eine sich in Längsrichtung 5 ändernde Breitenausgestaltung in Querrichtung 6. So sind neben dem schon vorbeschriebenen Abschnitt A1 noch die beiden weiteren Abschnitte A2 und A3 vorgesehen. Dabei schließt sich der Abschnitt A2 der Längsrippen 2 an den zweiten Rahmensteg 8 an. Der dritte Abschnitt A3 stellt einen Übergangsabschnitt zwischen den beiden Abschnitten A1 und A2 dar.

Wie sich insbesondere aus der Schnittdarstellung nach Figur 4 ergibt, verfügen die Längsrippen 2 im Abschnitt A2 in Querrichtung 6 über eine Breite, die der zweiten, maximalen Breite B2 entspricht. Demnach verfügen die Längsrippen 2 in ihrem stromabnehmerfahnenseitigen zweiten Abschnitt A2 in Querrichtung 6 über eine Breite, die bevorzugter Weise 2,06 mm beträgt. Im Bereich des zweiten Abschnitts A2 sind mithin die Längsrippen 2 und die weiteren Längsrippen 4 in Querrichtung 6 gleich breit ausgebildet.

Ausgehend vom zweiten Abschnitt A2 verjüngen sich die Längsrippen 2 in ihrer Breite in Querrichtung 6, und zwar kontinuierlich, bis sie gemäß der Schnittdarstellung gemäß Figur 5 eine dritte, maximale Breite B3 erreichen, die in ihrer Abmessung kleiner als die zweite, maximale Breite B2, aber größer als die erste, maximale Breite B1 ausfällt.

Ausgehend von dieser Breitenerstreckung gemäß Breite B3 verjüngt sich die Breite der Längsrippen 2 in Querrichtung 6 sprunghaft auf die in Figur 6 gezeigte erste, maximale Breite B1. Es ist demnach insgesamt hinsichtlich der Längsrippen 2 eine kontinuierliche, konisch zulaufende Breitenverjüngung von der Breite B2 auf die Breite B3 vorgesehen, gefolgt von einer sprunghaften Breitenverringerung auf die erste, maximale Breite B1.

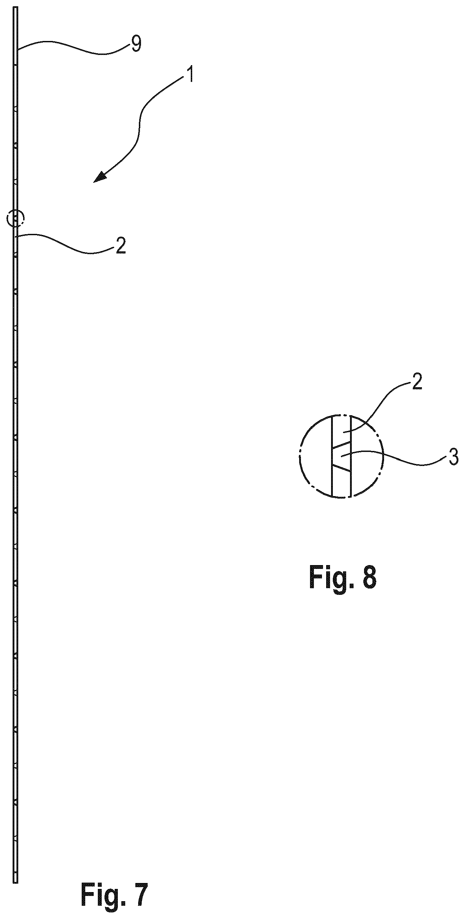

Das Gitter 1 ist bevorzugter Weise in einem kontinuierlichen Gießverfahren hergestellt. Zwecks Entformbarkeit sind deshalb sowohl die Längsrippen 2 bzw. 4 als auch die Querrippen 3 im Querschnitt trapezförmig ausgebildet, wie die Figuren 4, 5 und 6 hinsichtlich der Längsrippen 2 bzw. 4 und Figur 8 hinsichtlich der Querrippen 3 erkennen lassen.

Wie die Figuren 4, 5 und 6 im Übrigen erkennen lassen, meint "maximale Breite" im Sinne der Erfindung die Querschnittsstelle, an der eine Längsrippe 2 bzw. 4 in Querrichtung 6 die größte Abmessung aufweist. Bei einem trapezförmigen Querschnitt ist diese Querschnittsstelle beispielsweise mit Bezug auf die Zeichnungsebene nach Fig. 4 an der oberen Randkante einer Längsrippe 2 bzw. 4 ausgebildet, wobei in Fig. 4 die zweite, maximale Breite B2 gezeigt ist. Bei einem rechteckförmigen Querschnitt ist die Breitenerstreckung einer Längsstrebe 2 bzw. 4 in Querrichtung 6 konstant, verjüngt sich also im Unterschied zu einem trapezförmigen Querschnitt nicht, so dass bei einem rechteckförmigen Querschnitt die gegebene Breite in Querrichtung 6 gleich der maximalen Breite ist.

### Bezugszeichen

- 1: Gitter
- 2: Längsrippe
- 3: Querrippe
- 4: weitere Längsrippe
- 5: Längsrichtung
- 6: Querrichtung
- 7: erster Rahmensteg
- 8: zweiter Rahmensteg
- 9: Stromabnehmerfahne
- 10: offene Bereiche

## Patentansprüche

1. Gitter für eine Elektrode einer Blei-Säure-Batterie, mit einer Mehrzahl von in Querrichtung (6) beabstandet zueinander angeordneten Längsrippen (2) und einer Mehrzahl von jeweils zwischen zwei benachbarten Längsrippen (2) angeordneten und mit diesen verbundenen Querrippen (3), welche Längs- und Querrippen (2, 3) ein Gittermuster mit offenen Bereichen (10) zur Aufnahme einer aktiven Masse ausbilden, wobei die Längsrippen (2) zumindest in einem in Längsrichtung (5) verlaufenden Abschnitt (A1) in Querrichtung (6) eine erste, maximale Breite (B1) aufweisen, die hinsichtlich des von den offenen Bereichen (10) insgesamt bereitgestellten Aufnahmevolumens zur Aufnahme der aktiven Masse optimiert ausgebildet ist, **dadurch gekennzeichnet, dass** zumindest eine weitere Längsrippe (4) vorgesehen ist, die über ihre gesamte Längserstreckung in Querrichtung (6) eine zweite, maximale Breite (B2) aufweist, die die erste, maximale Breite (B1) der anderen Längsrippen (2) übersteigt.

2. Gitter nach Anspruch 1, **dadurch gekennzeichnet, dass** die zweite, maximale Breite (B2) die erste, maximale Breite (B1) um 20 % bis 35 %, vorzugsweise um 25 % bis 30 %, noch mehr bevorzugt um 27,5 % übersteigt.

3. Gitter nach einem der vorhergehenden Ansprüche, **dadurch gekennzeichnet, dass** die erste, maximale Breite (B1) 1,4 mm bis 1,8 mm, vorzugsweise 1,5 mm bis 1,7 mm, noch mehr bevorzugt 1,6 mm beträgt.

4. Gitter nach einem der vorhergehenden Ansprüche, **dadurch gekennzeichnet, dass** die zweite, maximale Breite (B2) 1,8 mm bis 2,2 mm, vorzugsweise 1,9 mm bis 2,1 mm, noch mehr bevorzugt 2,0 mm beträgt.

5. Gitter nach einem der vorhergehenden Ansprüche, **dadurch gekennzeichnet, dass** eine Mehrzahl von weiteren Längsrippen (4) mit einer in Querrichtung (6) zweiten, maximalen Breite (B2) vorgesehen ist.

6. Gitter nach Anspruch 5, **dadurch gekennzeichnet, dass** in Querrichtung (6) jede dritte bis fünfte, vorzugsweise jede vierte Längsrippe eine weitere Längsrippe (4) mit einer in Querrichtung (6) zweiten, maximalen Breite (B2) ist.

7. Gitter nach einem der vorhergehenden Ansprüche, **dadurch gekennzeichnet, dass** die Längsrippen (2) in einem in Längsrichtung (5) verlaufenden zweiten Abschnitt (A2) in Querrichtung (6) eine Breite aufweisen, die der zweiten, maximalen Breite (B2) der weiteren Längsrippe (4) entspricht.

8. Gitter nach Anspruch 7, **dadurch gekennzeichnet, dass** die Längsrippen (2) in einem in Längsrichtung (5) zwischen dem zweiten und dem ersten Abschnitt (A2, A1) verlaufenden dritten Abschnitt (A3) in Querrichtung (6) eine Breite aufweisen, die sich ausgehend von der zweiten, maximalen Breite (B2) kontinuierlich bis zu einer dritten, maximalen Breite (B3) verjüngt.

9. Gitter nach einem der vorhergehenden Ansprüche, **dadurch gekennzeichnet, dass** sich die Längsrippen (2) und die weitere Längsrippe (4) zwischen einem ersten Rahmensteg (7) und einem zweiten Rahmensteg (8) erstrecken, mit denen sie jeweils einstückig verbunden sind, wobei der zweite Rahmensteg (8) eine Stromabnehmerfahne (9) trägt.

10. Gitter nach Anspruch 9, **dadurch gekennzeichnet, dass** der zweite Abschnitt (A2) der Längsrippen (2) in den zweiten Rahmensteg (8) und die ersten Abschnitte (A1) der Längsrippen (2) in den ersten Rahmensteg (7) übergehen.

11. Gitter nach einem der vorhergehenden Ansprüche, **dadurch gekennzeichnet, dass** dieses in einem kontinuierlichen Gießverfahren hergestellt ist.

12. Gitter nach Anspruch 11, **dadurch gekennzeichnet, dass** die Längsrippen (2) sowie die weitere Längsrippe (4) jeweils einen trapezförmig ausgebildeten Querschnitt aufweisen.

13. Gitter nach einem der vorhergehenden Ansprüche 1 bis 10, **dadurch gekennzeichnet, dass** die Längsrippen (2) sowie die weitere Längsrippe (4) jeweils einen rechteckförmig ausgebildeten Querschnitt aufweisen.

## Claims

1. Grid for an electrode of a lead-acid battery, the grid comprising a plurality of longitudinal ribs (2) arranged at a distance from each other in the transverse direction (6) and a plurality of transverse ribs (3), each arranged between two adjacent longitudinal ribs (2) and connected thereto, which longitudinal and transverse ribs (2, 3) form a grid pattern with open areas (10) for receiving an active mass, wherein the longitudinal ribs (2) have a first, maximum width (B1) in the transverse direction (6) at least in a section (A1) extending in the longitudinal direction (5), which first, maximum width is designed in an optimized manner with regard to the total receiving volume provided by the open areas (10) for receiving the active mass, **characterized in that** at least one further longitudinal rib (4) is provided, which has a second, maximum width (B2) in the transverse direction (6) over its entire longitudinal extent, which second, maximum width exceeds the first, maximum width (B1) of the other longitudinal ribs (2).

2. Grid according to claim 1, **characterized in that** the second, maximum width (B2) exceeds the first, maximum width (B1) by 20% to 35%, preferably by 25% to 30%, even more preferably by 27.5%.

3. Grid according to any one of the preceding claims, **characterized in that** the first, maximum width (B1) is 1.4 to 1.8 mm, preferably 1.5 to 1.7 mm, even more preferably 1.6 mm.

4. Grid according to any one of the preceding claims, **characterized in that** the second, maximum width (B2) is 1.8 mm to 2.2 mm, preferably 1.9 mm to 2.1 mm, even more preferably 2.0 mm.

5. Grid according to any one of the preceding claims, **characterized in that** a plurality of further longitudinal ribs (4) having a second, maximum width (B2) in the transverse direction (6) is provided.

6. Grid according to claim 5, **characterized in that** every third to fifth, preferably every fourth longitudinal rib in the transverse direction (6) is a further longitudinal rib (4) having a second, maximum width (B2) in the transverse direction (6).

7. Grid according to any one of the preceding claims, **characterized in that** the longitudinal ribs (2) have, in a second section (A2) extending in the longitudinal direction (5), a width in the transverse direction (6) that corresponds to the second, maximum width (B2) of the further longitudinal rib (4).

8. Grid according to claim 7, **characterized in that** the longitudinal ribs (2) have in a third section (A3), which extends in the longitudinal direction (5) between the second and the first section (A2, A1), a width in the transverse direction (6) that continuously narrows from the second, maximus width (B2) to a third, maximum width (B3).

9. Grid according to any one of the preceding claims, **characterized in that** the longitudinal ribs (2) and the further longitudinal rib (4) extend between a first frame web (7) and a second frame web (8) to which they are integrally connected, wherein the second frame web (8) carries a current collector lug (9).

10. Grid according to claim 9, **characterized in that** the second section (A2) of the longitudinal ribs (2) merge into the second frame web (8) and the first sections (A1) of the longitudinal ribs (2) merge into the first frame web (7).

11. Grid according to any one of the preceding claims, **characterized in that** the gird is produced in a continuous casting process.

12. Grid according to claim 11, **characterized in that** the longitudinal ribs (2) as well as the further longitudinal rib (4) each have a trapezoidal cross-section.

13. Grid according to any one of the preceding claims 1 to 10, **characterized in that** the longitudinal ribs (2) as well as the further longitudinal rib (4) each have a rectangular cross-section.

## Revendications

1. Grille pour une électrode d'une batterie au plomb-acide, la grille comprenant une pluralité de nervures longitudinales (2) disposées à distance les unes des autres dans la direction transversale (6) et une pluralité de nervures transversales (3), chacune disposée entre deux nervures longitudinales adjacentes (2) et reliée à celles-ci, ces nervures longitudinales et transversales (2, 3) formant un motif de grille avec des zones ouvertes (10) pour recevoir une masse active, où les nervures longitudinales (2) ont une première largeur maximale (B1) dans la direction transversale (6) au moins dans une section (A1) s'étendant dans la direction longitudinale (5), cette première largeur maximale étant conçue de manière optimisée par rapport au volume de réception total fourni par les zones ouvertes (10) pour la réception de la masse active, **caractérisée en ce qu'**au moins une autre nervure longitudinale (4) est prévue, qui a une deuxième largeur maximale (B2) dans la direction transversale (6) sur toute son étendue longitudinale, cette deuxième largeur maximale dépassant la première largeur maximale (B1) des autres nervures longitudinales (2).

2. Grille selon la revendication 1, **caractérisée en ce que** la deuxième largeur maximale (B2) dépasse la première largeur maximale (B1) de 20 % à 35 %, de préférence de 25 % à 30 %, de préférence encore de 27,5 %.

3. Grille selon l'une quelconque des revendications précédentes, **caractérisée en ce que** la première largeur maximale (B1) est de 1,4 mm à 1,8 mm, de préférence de 1,5 mm à 1,7 mm, encore plus préférée de 1,6 mm.

4. Grille selon l'une quelconque des revendications précédentes, **caractérisée en ce que** la deuxième largeur maximale (B1) est de 1,4 à 1,8 mm, de préférence de 1,5 à 1,7 mm, encore plus préférée de 1,6 mm.

5. Grille selon l'une quelconque des revendications précédentes, **caractérisée en ce qu'**une pluralité d'autres nervures longitudinales (4) ayant une seconde largeur maximale (B2) dans la direction transversale (6) est prévue.

6. Grille selon la revendication 5, **caractérisée en ce que** chaque troisième à cinquième nervure longitudinale, de préférence chaque quatrième nervure longitudinale dans la direction transversale (6), est une autre nervure longitudinale (4) ayant une seconde largeur maximale (B2) dans la direction transversale (6).

7. Grille selon l'une quelconque des revendications précédentes, **caractérisée en ce que** les nervures longitudinales (2) ont, dans une deuxième section (A2) s'étendant dans la direction longitudinale (5), une largeur dans la direction transversale (6) qui correspond à la deuxième largeur maximale (B2) de l'autre nervure longitudinale (4).

8. Grille selon la revendication 7, **caractérisée en ce que** les nervures longitudinales (2) ont, dans une troisième section (A3) qui s'étend dans la direction longitudinale (5) entre la deuxième et la première section (A2, A1), une largeur dans la direction transversale (6) qui se rétrécit de manière continue de la deuxième largeur maximale (B2) à une troisième largeur maximale (B3).

9. Grille selon l'une quelconque des revendications précédentes, **caractérisée en ce que** les nervures longitudinales (2) et l'autre nervure longitudinale (4) s'étendent entre une première âme de cadre (7) et une deuxième âme de cadre (8) auxquelles elles sont intégralement reliées, la deuxième âme de cadre (8) portant une patte de prise de courant (9).

10. Grille selon la revendication 9, **caractérisée en ce que** la deuxième section (A2) des nervures longitudinales (2) se fond dans la deuxième âme de cadre (8) et les premières sections (A1) des nervures longitudinales (2) se fondent dans la première âme de cadre (7).

11. Grille selon l'une quelconque des revendications précédentes, **caractérisée en ce que** la grille est produite par un procédé de coulée continue.

12. Grille selon la revendication 11, **caractérisée en ce que** les nervures longitudinales (2) ainsi que l'autre nervure longitudinale (4) ont chacune une section transversale trapézoïdale.

13. Grille selon l'une quelconque des revendications 1 à 10 précédentes, **caractérisée en ce que** les nervures longitudinales (2) ainsi que l'autre nervure longitudinale (4) ont chacune une section transversale rectangulaire.
